# EUROPÄISCHE PATENTSCHRIFT

(11) **EP 1 510 893 B1**
(45) Veröffentlichungstag und Bekanntmachung des Hinweises auf die Patenterteilung: **05.11.2014**
(21) Anmeldenummer: 03077737.9
(22) Anmeldetag: 01.09.2003
(51) Int. Cl.: G05B 19/408

(54) **Verfahren und Vorrichtung zum Festlegen der Bewegungsbahn eines Handling-systems**
Process and device for the determination of the movement path in a handling system
Procédé et dispositf pour la détermination du trajet de déplacement d'un système de manipulation

(43) Veröffentlichungstag der Anmeldung: 02.03.2005
(73) Patentinhaber: TRUMPF Werkzeugmaschinen GmbH + Co. KG, 71254 Ditzingen (DE)
(72) Erfinder: Otterbach, Olaf, 70178 - Stuttgart (DE); Ege-Keilbach, Gabriele, 70499 - Stuttgart (DE); Munk, Mathias, 74343 - Sachsenheim (DE)
(74) Vertreter: Kohler Schmid Möbus

(56) Entgegenhaltungen:
- EP-A- 0 455 817
- EP-A- 0 792 726
- US-A- 4 831 548

## Beschreibung

Die vorliegende Erfindung betrifft ein Verfahren zum Festlegen der Bewegungsbahn eines ein Werkstück bewegenden Handlingsystems, insbesondere eines Handlingsystems einer Biegemaschine wie z.B. einer Abkantpresse, sowie eine Vorrichtung zum Durchführen dieses Verfahrens.

Ein derartiges Verfahren und eine entsprechende Vorrichtung sind beispielsweise durch US 4,831,548 bekannt geworden.

Das Teachen, also die Festlegung der Bewegungen von Handlingsystemen wie Robotern, ist immer noch eine mühsame Angelegenheit. Dabei sind Fahrpunkte durch deren Position und Ausrichtung des Handlingsystems festzulegen. Die Methoden der Festlegung von Fahrpunkten wurde ebenfalls in die Programmierung rechnergestützter Simulationen von Handlingsystemen übernommen. Diese heute üblichen Simulationen ermöglichen zwar eine Überprüfung der Fahrbewegungen, bevor diese an der Maschine abgearbeitet werden, erleichtern aber nur bedingt die Festlegung dieser Fahrpunkte.

Die eingangs genannte US 4,831,548 beschreibt ein Verfahren zum Teachen eines Roboters für einen Einsteckvorgang. Die Bewegungsbahn des Roboters wird festgelegt, indem eine Roboterhand, welche ein einzuführendes Einsteckteil hält, positioniert wird. Die sich auf diese Weise ergebenden Stellungen des Roboters werden fortlaufend abspeichert. Zur Positionierung der Roboterhand dient ein Bedienmenu, über welches die Roboterhand in Richtung der Koordinatenachsen eines an der Roboterhand angeordneten Koordinatensystems verschoben oder um diese Koordinatenachsen gedreht werden kann. Bei dem aus der US 4,831,548 bekannten Verfahren erfolgt die Bewegungsteuerung des Roboters zum Teachen demnach bezogen auf den Ursprung eines Koordinatensystems an der Roboterhand.

Aus der EP-A-0 792 726 ist ein Verfahren zum Teachen eines Roboters bekannt, bei welchem zunächst eine aufgrund eines Roboter-Steuerprogramms vorgegebene Bewegungsbahn eines Roboters auf einen Teach-Panel angezeigt wird. Die Bewegungsbahn wird als Verlauf des Mittelpunktes eines an dem Roboter angeordneten Werkzeuges dargestellt. Eine Änderung der Bewegungsbahn des Roboters erfolgt in Bezug auf diesen Werkzeug-Mittelpunkt durch manuelles Verschieben von Fahrpunkten auf der Anzeige.

Im Falle eines aus der EP-A-0 455 817 bekannten Programmiersystems wird der Roboter mitsamt eines Werkzeuges auf einer Anzeige dargestellt. Ein dreidimensionales Bedienelementes wird der Spitze des Werkzeuges zugeordnet. Zur Änderung der Roboterstellung wird das dreidimensionale Bedienelement auf der Anzeige verschoben. Die neue Position des Bedienelementes definiert eine neue Position der Werkzeugspitze und der Roboter nimmt eine Stellung ein, in welcher die Werkzeugspitze an der neu definierten Position angeordnet ist. Im Stand der Technik gemäß EP-A-0 455 817 erfolgen Änderungen der Roboterstellungen demnach in Bezug auf die Werkzeugspitze eines an dem Roboter angeordneten Werkzeuges.

Aus der JP 02077805 ist ein Teach-Verfahren für einen Roboter bekannt, bei dem ein Teach-Punkt während der Simulation durch eine Roboteroperation korrigiert wird, während die Simulation auf der Basis eines Robotersteuerprogramms und von Teach-Daten des Roboters ausgeführt wird.

Demgegenüber ist es die Aufgabe der vorliegenden Erfindung, ein Verfahren der eingangs genannten Art dahingehend weiterzubilden, dass der Bediener die Bewegungsbahn des Handlingsystems möglichst einfach und leicht korrigieren kann, sowie ein entsprechende Vorrichtung bereitzustellen.

Diese Aufgabe wird erfindungsgemäß dadurch gelöst, dass bei der manuellen Korrektur einer zuvor festgelegten Bewegungsbahn, welche entsprechend den unterschiedlichen am Werkstück durchgeführten Prozessschritten mehrere Bewegungsabschnitte aufweist, ein Rechner jedem Bewegungsabschnitt eine in oder auf dem Werkstück liegende Bezugsstelle, -linie oder -fläche zuordnet, die in dem jeweiligen Bewegungsabschnitt die Bezugsgröße für eine manuelle Korrektur der Bewegungsbahn des Handlingsystems bildet, wobei verschiedenen Bewegungsabschnitten verschiedene Bezugsstellen, -linien oder -flächen zugeordnet werden.

Der wesentliche Vorteil der Erfindung besteht darin, dass am Werkstück für jeden Bewegungsabschnitt eine Bezugsgröße für die manuelle Korrektur der Bewegungsbahn festgelegt wird. Diese Bezugsgröße wird möglichst so gewählt, dass der Benutzer das Werkstück intuitiv im Raum bewegen kann, d.h., dass er die Art, wie er selbst als Maschinenbediener, d.h. vor einer Maschine stehend, das Werkstück führen würde, bei der manuellen Korrektur wiedererkennt.

Vorzugsweise wird zumindest der zu korrigierende Bewegungsabschnitt mit seiner zugeordneten Bezugsstelle, -linie oder -fläche auf einem Bildschirm angezeigt und die manuelle Korrektur der Bewegungsbahn am Bildschirm graphisch durchgeführt.

In einer besonders vorteilhaften Verfahrensvariante werden die Freiheitsgrade, die das Werkstück in der Bezugsstelle, -linie oder -fläche besitzt, auf dem Bildschirm angezeigt. In einer bevorzugten Weiterbildung dieser Verfahrensvariante werden die Freiheitsgrade der Bezugsstelle, -linie oder -fläche auf dem Bildschirm als Dialogelement anzeigt, das der Bezugsstelle, -linie oder -fläche optisch zugeordnet ist, insbesondere mit der Bezugsstelle, -linie oder -fläche durch eine Linie verbunden ist. Dabei können die angezeigten Freiheitsgrade der Bezugsstelle, -linie oder -fläche auf dem Bildschirm aktiviert werden, derart, dass eine Bewegung des aktivierten Freiheitsgrades zu einer entsprechenden Bewegung des Werkstücks auf dem Bildschirm führt. Das Dialogelement dient zur direkten Manipulation des Handlingsystems für das automatisierte Verarbeiten von Werkstücken mit dem Ziel, Fahrpunkte (Teach-Punkte) auf einfachste Weise graphisch durch den Benutzer festlegen zu können. Die Funktionalität des Dialogelementes legt fest, welche Aktionen mit diesem Dialogelement im jeweiligen Bewegungsabschnitt am Werkstück durchgeführt werden können. Das Handlingsystem ist ein Objekt, das sich im dreidimensionalen Raum bewegt. Die Fahrpunkte beziehen sich auf eine Saugerplatte des Handlingsystems bzw. auf das Werkstück selbst. Die heutigen praktikablen Eingabegeräte zur direkten graphischen Manipulation, wie zum Beispiel eine Maus, realisieren aber nur zweidimensionale lineare Bewegungen. Aus diesem Grund werden am Dialogelement die sechs Bewegungsrichtungen (Freiheitsgrade), die in einer Bezugsstelle, -linie oder -fläche möglich sind, also die Bewegung in die X-, Y- und Z-Richtung und die drei Drehungen um die X-, Y- und Z-Achse, in zweidimensionale Bewegungsrichtungen zerlegt und als Symbole angezeigt. Durch "Anfassen" und Verschieben eines Symbols kann die jeweilige zweidimensionale Bewegung des Werkstücks und durch sequentielle Durchführung zweier dieser zweidimensionalen Bewegungen eine dreidimensionale Bewegung durchgeführt werden. Die Verschiebungsfunktionalität des Dialogelements entspricht den Erwartungen eines Benutzers, d.h., ganz gleich, wie das Handlingsystem und das Werkstück auf dem Bildschirm dargestellt werden, es ist immer sichergestellt, dass das Werkstück sich in die Richtung bewegt, in die der Benutzer es mit Hilfe des Dialogelements zieht. Das Dialogelement bildet Handlungen des Maschinenbedieners z.B. an einer Biegemaschine auf einen metaphorischen Dialog ab.

Beispielsweise kann im Falle einer Abkantpresse als Bezugsstelle, -linie oder -fläche beim Heranführen des Werkstücks an die Abkantpresse der Angriffpunkt des Handlingsystems am Werkstück, beim Einfädeln des Werkstücks zwischen die beiden Biegewerkzeuge der Abkantpresse die Vorderkante des Werkstücks und beim Kippen des Werkstücks innerhalb des Biegebereiches die zur Biegung anstehende Biegelinie des Werkstücks verwendet werden.

Die Erfindung betrifft auch eine Software, ein Computerprodukt oder Computerprogramm, das so ausgebildet ist, dass das oben beschriebene Verfahren auf einem Computer durchgeführt werden kann.

Die Erfindung betrifft in einem weiteren Aspekt auch eine Vorrichtung zum rechnergestützten Durchführen des oben beschriebenen Verfahrens mit einem Bildschirm zum Anzeigen des zu korrigierenden Bewegungsabschnitts, der zugeordneten Bezugsstelle, -linie oder -fläche und deren Freiheitsgrade, mit einem Rechner zum Berechnen der korrigierten Bewegungsbahn sowie mit einer Bedieneinrichtung zum Bewegen der Bezugsstelle, -linie oder -fläche auf dem Bildschirm.

Vorzugsweise sind die Freiheitsgrade der Bezugsstelle, -linie oder -fläche auf dem Bildschirm dauerhaft als Dialogelement angezeigt, das beispielsweise durch eine Linie mit der Bezugsstelle, -linie oder -fläche verbunden ist. Eine Verschiebung der angezeigten Freiheitsgrade durch den Benutzer mittels der Bedieneinheit führt zu einer entsprechenden Bewegung des Werkstücks auf dem Bildschirm.
Das Dialogelement dient zur direkten Manipulation des Handlingsystems für das automatisierte Verarbeiten von Werkstücken mit dem Ziel, Fahrpunkte auf einfachste Weise mit der Maus durch den Benutzer festlegen zu können.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: die erfindungsgemäße Vorrichtung mit einem Bildschirm, auf dem ein Handlingsystem einer Abkantpresse und ein in den Biegebereich der Abkantpresse einzufädelndes Werkstück dargestellt sind;
- Fig. 2: die Vorrichtung der Fig. 1, wobei auf dem Bildschirm das Handlingsystem und das beim Einfädelvorgang verkippte Werkstück dargestellt sind und die Abkantpresse weggelassen ist; und
- Fig. 3: die Vorrichtung der Fig. 1, wobei auf dem Bildschirm das Handlingsystem und das in den Biegebereich der Abkantpresse eingefädelte Werkstück dargestellt sind.

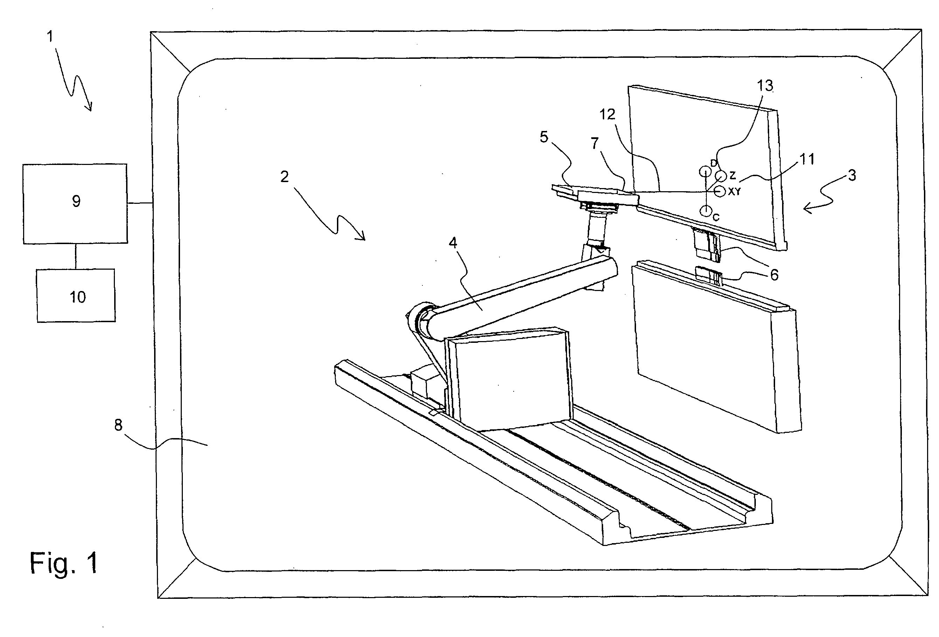

Die in Fig. 1 gezeigte Vorrichtung 1 dient zum rechnergestützten Festlegen (Teachen) der Bewegungsbahn eines Handlingsystems 2 einer Abkantpresse 3, um ein von einem Robotorarm 4 des Handlingsystem 2 getragenes Werkstück (Biegeteil) 5 zwischen die beiden Biegewerkzeuge 6 der Abkantpresse 3 zu- und abzuführen.

Eine, z.B. mittels Simulation, zunächst festgelegte Bewegungsbahn des Handlingsystems 2 kann mit Hilfe der Vorrichtung 1 manuell korrigiert werden. Bei dieser Korrektur werden die folgenden Schritte durchgeführt:
1. Entsprechend den unterschiedlichen am Werkstück 5 durchgeführten Prozessschritten, wie z.B. Greifen des Werkstücks 5 mit dem Rotorarm 4, Heranfahren des Werkstücks 5 bis vor die Abkantpresse 3, Einfädeln des Werkstücks 5 zwischen die Biegewerkzeuge 6 der Abkantpresse 3, Verkippen des Werkstücks 5 zwischen den Biegewerkzeugen 6, Ausfädeln des Werkstücks 5 aus dem Bereich der Biegewerkzeuge 6, Verfahren des Werkstücks 5 fort von der Abkantpresse 3 und Ablegen des Werkstücks 5, wird die Bewegungsbahn des Handlingsystems 2 in einzelne Bewegungsabschnitte unterteilt. Diese Unterteilung der Prozessschritte bzw. Bewegungsabschnitte wird vor der erstmaligen Ausführung der manuellen Korrektur dauerhaft festgelegt, z.B. in einem Rechner gespeichert, und dann bei jeder Ausführung der manuellen Korrektur verwendet.
2. Jedem Bewegungsabschnitt der Bewegungsbahn des Handlingsystems 2 wird eine in oder auf dem Werkstück 5 liegende Bezugsstelle, -linie oder -fläche 7 (in Fig. 1 die vorderste Kante des Werkstücks 5) zugeordnet, die in dem jeweiligen Bewegungsabschnitt den Angriffspunkt bzw. die Bezugsgröße für eine manuelle Korrektur der Bewegungsbahn des Handlingsystems 2 bildet. Auch diese Zuordnung von Bezugsstellen, -linien oder flächen zu den einzelnen Bewegungsabschnitten wird vor der erstmaligen Ausführung der manuellen Korrektur dauerhaft festgelegt, z.B. in einem Rechner gespeichert, und dann bei jeder Ausführung der manuellen Korrektur verwendet.
3. Der zu korrigierende Bewegungsabschnitt mit seiner zugeordneten Bezugsstelle, -linie oder -fläche 7 wird dem Bediener (d.h. der teachenden Person) angezeigt, der dann die manuelle Korrektur der Bewegungsbahn des Handlingsystems 2 durch Bewegen der Bezugsstelle, -linie oder -fläche 7 graphisch ausführt. Dabei wird die erforderliche Bewegung des Handlingsystems, um diese vom Bediener vorgegebene Bewegung des Werkstücks zu erreichen, rechnergestützt ermittelt. Üblicherweise werden nur einzelne Punkte der Bewegungsbahn manuell korrigiert, mit denen dann die endgültige Bewegungsbahn rechnergestützt durch Simulation ermittelt wird.

Die Vorrichtung 1 umfasst einen Bildschirm 8 zum Anzeigen des zu korrigierenden Bewegungsabschnitts, der zugeordneten Bezugsstelle, -linie oder -fläche 7 und deren Freiheitsgrade, einen Rechner (Computer) 9 zum Speichern der einzelnen Bewegungsabschnitte und der zugeordneten Bezugsstellen, -linien oder flächen und zum Berechnen der korrigierten Bewegungsbahn sowie eine Bedieneinrichtung (z.B. Maus) 10 zum Bewegen der Bezugsstelle, -linie oder -fläche 7 auf dem Bildschirm 8.

Die Freiheitsgrade der jeweiligen Bezugsstelle, -linie oder -fläche 7 werden auf dem Bildschirm 8 dauerhaft als Dialogelement **11** angezeigt, das neben der Bezugsstelle, -linie oder -fläche 7 angeordnet und mit dieser durch eine Linie **12** verbunden ist. Das Dialogelement 11 ist ein koordinatenkreuzähnliches Gebilde, dessen Enden mit Kreisen 13 markiert sind, die durch den Benutzer mit der Bedieneinrichtung 10 "angefasst" bzw. aktiviert werden können. Die Kreise 13 stehen für die jeweiligen zweidimensionalen Bewegungsmöglichkeiten, die der Benutzer durch "Anfassen" und Verschieben eines Kreises 13 durchführen kann. Eine sequentielle Durchführung zweier dieser zweidimensionalen Bewegungen kann dann eine dreidimensionale Bewegung des angezeigten Handlingsystems 2 ergeben. Die Verschiebungsfunktionalität des Dialogelements 11 entspricht den Erwartungen eines Benutzers, d.h., ganz gleich, wie verdreht die Biegeszenerie auch auf dem Bildschirm 8 dargestellt wird, es ist immer sichergestellt, dass das Werkstück 5 sich in die Richtung bewegt, in die der Benutzer es mit Hilfe des Dialogelements 11 zieht. Im gezeigten Ausführungsbeispiel hat das Dialogelement 11 vier Kreise 13 entsprechend den Bewegungen "Drehen (D) des Werkstückes 5 um die Handgelenkachse des Roboterarms 4", "Kippen (XY) des Werkstückes 5", "Verschieben (C) des Werkstückes 5 vertikal und horizontal" und "Verschieben (Z) des Werkstücks 5 vorwärts und zurück".

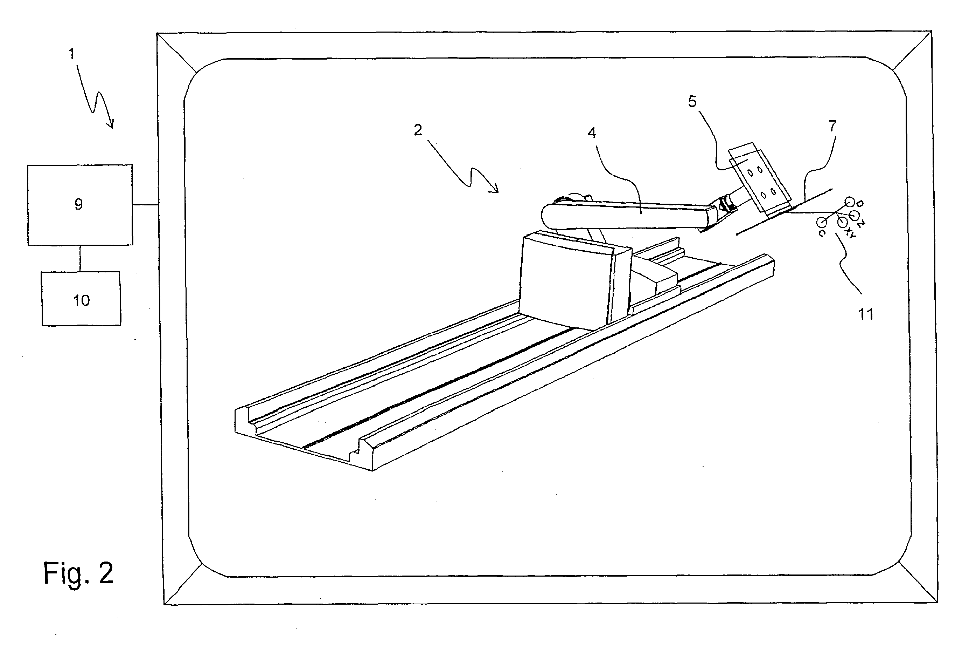

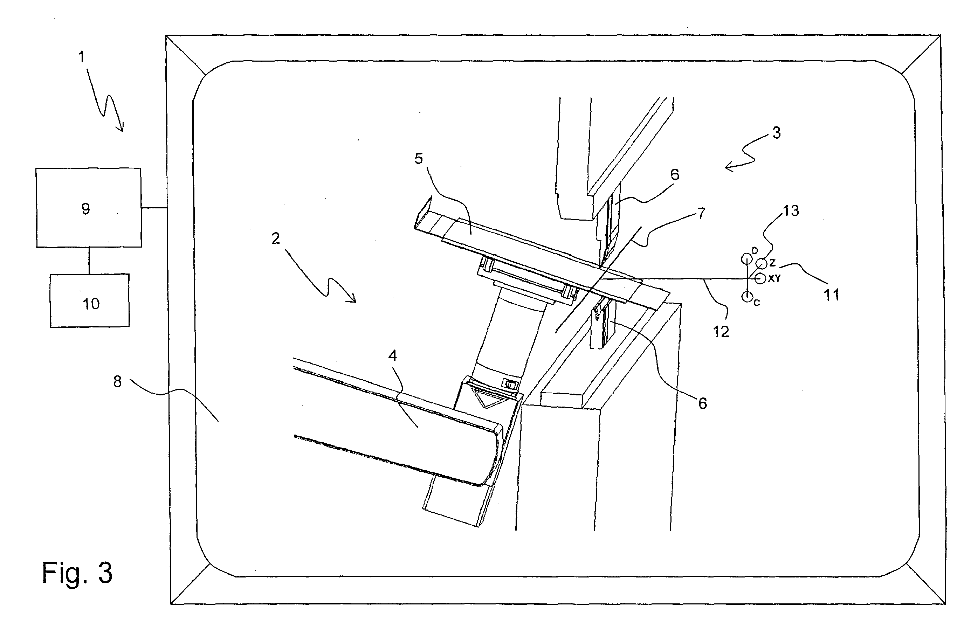

In **Fig. 1** sind auf dem Bildschirm 8 das Handlingsystem 2 und das in den Biegebereich der Abkantpresse 3 einzufädelnde Werkstück 5 dargestellt. Führt ein vor der Abkantpresse 3 stehender Maschinenbediener das Werkstück 5 vor der Abkantpresse 3, so hat er immer die vorderste Kante des Werkstücks 5 im Blick, denn mit dieser Kante könnte er an der vor ihm liegenden Abkantpresse 3 anstoßen. Diese vorderste Kante wird daher vom Rechner 9 dem Bewegungsabschnitt "Einfädeln des Werkstücks 5" als Bezugslinie 7 für die manuelle Korrektur der Bewegungsbahn zugeordnet und bildet den Angriffspunkt des Dialogelements 11. Der Einfädelvorgang wird sinnvollerweise durch Kippen des Werkstücks 5 vor der Abkantpresse 3, also außerhalb der beiden Biegewerkzeuge 6, um die vordere Werkstückkante bzw. um die Bezugslinie 7 eingeleitet. Beim Kippen des Werkstücks 5 um seine vorderste Kante bleibt die Position dieser Kante gegenüber den Biegewerkzeugen 6 invariant. Dies ist notwendig, da diese Kante des Werkstücks 5 beim Einfädeln als erste zwischen die Biegewerkzeuge 6 geschoben wird. Aus diesem Grund wird das Kippen des Werkstücks 5 vor der Abkantpresse 3 auch vom Dialogelement 11 um die vordere Werkstückkante durchgeführt. In **Fig. 2** sind auf dem Bildschirm 8 das Handlingsystem 2 und das beim Einfädeln verkippte Werkstück 5 dargestellt. Um die Drehung von einer Verschiebung unterscheidbar zu machen, dreht sich das Dialogelement 11 bei der linearen Mausbewegung für die Durchführung einer Drehbewegung des angezeigten Handlingsystems 2 ebenfalls mit. Auf diese Weise zeigt das Dialogelement 11 auch die Orientierung des Werkstücks 5 bezogen auf die Bezugslinie 7 an. Der Einfädelvorgang ist beendet, wenn das Werkstück 5 mit seiner zur Biegung anstehenden Biegekante direkt unter dem oberen bzw. über dem unteren Biegewerkzeug 6 liegt, also in der durch beide Biegewerkzeuge 6 definierten Ebene liegt. Diese Situation ist in **Fig. 3** auf dem Bildschirm 8 dargestellt.

Für noch erforderliche Kippbewegungen des eingefädelten Werkstücks 5 würde der vor der Abkantpresse 3 stehende Maschinenbediener das Werkstücks 5 um die gedachte Schnittlinie des Werkstücks 5 mit der durch beide Biegewerkzeuge 6 definierten Ebene drehen. Diese Schnittlinie wird daher vom Rechner 9 dem Bewegungsabschnitt "Verkippen des Werkstücks 5 zwischen den Biegewerkzeugen 6" als Bezugslinie 7 für die manuelle Korrektur der Bewegungsbahn zugeordnet und bildet den Angriffspunkt des Dialogelements 11. So wird verhindert, dass das Werkstück 5 bei einer Kippbewegung mit den Biegewerkzeugen 6 kollidiert.

## Patentansprüche

1. Verfahren zum Festlegen der Bewegungsbahn eines ein Werkstück (5) bewegenden Handlingsystems (2), insbesondere eines Handlingsystems einer Abkantpresse (3), **dadurch gekennzeichnet, dass** die Bewegungsbahn des Handlingsystems (2), die entsprechend den unterschiedlichen am Werkstück (5) durchgeführten Prozessschritten mehrere Bewegungsabschnitte aufweist, wobei die Bewegungsbahn des Handlingsystems (2) zunächst festgelegt und dann manuell korrigiert wird, und
dass bei der manuellen Korrektur ein Rechner (9) jedem Bewegungsabschnitt eine in oder auf dem Werkstück (5) liegende Bezugsstelle, -linie oder -fläche (7) zuordnet, die in dem jeweiligen Bewegungsabschnitt die Bezugsgröße für eine manuelle Korrektur der Bewegungsbahn des Handlingsystems (2) bildet, wobei verschiedenen Bewegungsabschnitten verschiedene Bezugsstellen, -linien oder -flächen zugeordnet werden.

2. Verfahren nach Anspruch 1, **dadurch gekennzeichnet, dass** zumindest der zu korrigierende Bewegungsabschnitt mit seiner zugeordneten Bezugsstelle, -linie oder -fläche (7) auf einem Bildschirm (8) angezeigt und die Korrektur der Bewegungsbahn am Bildschirm (8) durchgeführt wird.

3. Verfahren nach Anspruch 2, **dadurch gekennzeichnet, dass** die Freiheitsgrade, die das Werkstück (5) in der Bezugsstelle, -linie oder -fläche (7) besitzt, auf dem Bildschirm (8) angezeigt werden.

4. Verfahren nach Anspruch 3, **dadurch gekennzeichnet, dass** die Freiheitsgrade der Bezugsstelle, -linie oder -fläche (7) auf dem Bildschirm (8) als Dialogelement (11) anzeigt werden, das der Bezugsstelle, -linie oder - fläche (7) optisch zugeordnet ist, insbesondere mit der Bezugsstelle, -linie oder -fläche (7) durch eine Linie (12) verbunden ist.

5. Verfahren nach Anspruch 3 oder 4, **dadurch gekennzeichnet, dass** die angezeigten Freiheitsgrade der Bezugsstelle, -linie oder -fläche (7) auf dem Bildschirm (8) aktivierbar sind, derart, dass eine Bewegung des aktivierten Freiheitsgrades zu einer entsprechenden Bewegung des Werkstücks (5) auf dem Bildschirm (8) führt.

6. Verfahren nach einem der vorhergehenden Ansprüche, **dadurch gekennzeichnet, dass** der Rechner (9) in einem Bewegungsabschnitt, insbesondere beim Zuführen des Werkstücks (5) zur Abkantpresse (3), als Bezugsstelle, -linie oder -fläche (7) den Angriffpunkt des Handlingsystems (2) am Werkstück (5) definiert.

7. Verfahren nach einem der vorhergehenden Ansprüche, **dadurch gekennzeichnet, dass** der Rechner (9) in einem Bewegungsabschnitt, insbesondere beim Einfädeln des Werkstücks (5) in den Bearbeitungsbereich der Abkantpresse (3), als Bezugslinie (7) eine Kante des Werkstücks (5) definiert.

8. Verfahren nach einem der vorhergehenden Ansprüche, **dadurch gekennzeichnet, dass** der Rechner (9) in einem Bewegungsabschnitt als Bezugsstelle, -linie oder -fläche (7), insbesondere beim Positionieren des Werkstücks (5) innerhalb des Bearbeitungsbereiches der Abkantpresse (3), eine Bearbeitungsstelle, -linie oder -fläche des Werkstücks (5) definiert.

9. Software oder Computerprogramm welcher Software Kode enthält, der angepasst ist zum Durchführen des Verfahrens nach einem der vorhergehenden Ansprüche auf einem Rechner (9).

10. Vorrichtung (1) mit Software oder Computerprogramm nach Anspruch 9 angepasst zum Durchführen des Verfahrens nach einem der Ansprüche 1 bis 8, mit einem Bildschirm (8) zum Anzeigen des zu korrigierenden Bewegungsabschnitts, der zugeordneten Bezugsstelle, -linie oder -fläche (7) und deren Freiheitsgrade, mit einem Rechner (9) zum Berechnen der korrigierten Bewegungsbahn sowie mit einer Bedieneinrichtung (10) zum Bewegen der Bezugsstelle, -linie oder -fläche (7) auf dem Bildschirm (8).

11. Vorrichtung nach Anspruch 10, **dadurch gekennzeichnet, dass** die Freiheitsgrade der Bezugsstelle, -linie oder -fläche (7) auf dem Bildschirm (8) als Dialogelement (11) angezeigt sind.

12. Vorrichtung nach Anspruch 11, **dadurch gekennzeichnet, dass** das Dialogelement (11) optisch der Bezugsstelle, -linie oder -fläche (7) zugeordnet ist, insbesondere mit der Bezugsstelle, -linie oder -fläche (7) durch eine Linie (12) verbunden ist.

13. Vorrichtung nach Anspruch 11 oder 12, **dadurch gekennzeichnet, dass** das Dialogelement (11) die Orientierung des Werkstücks (5) bezogen auf die Bezugsstelle, -linie oder -fläche (7) anzeigt.

14. Vorrichtung nach einem der Ansprüche 10 bis 13, **dadurch gekennzeichnet, dass** die Freiheitsgrade der Bezugsstelle, -linie oder -fläche (7) mittels der Bedieneinrichtung (10) aktivierbar sind, derart, dass eine Bewegung eines Freiheitsgrades auf dem Bildschirm (8) zu einer entsprechenden Bewegung des Werkstücks (5) auf dem Bildschirm (8) führt.

## Claims

1. Method for determining the movement path of a handling system (2) which moves a workpiece (5), in particular a handling system of a bending press (3), **characterised in that** the movement path of the handling system (2) has a plurality of movement portions in accordance with the different process steps carried out on the workpiece (5), the movement path of the handling system (2) first being determined and then manually corrected, and
**in that**, during the manual correction, a processor (9) associates with each movement portion a reference location, line or face (7) which is located in or on the workpiece (5) and which forms in the respective movement portion the reference value for a manual correction of the movement path of the handling system (2), different reference locations, lines or faces being associated with different movement portions.

2. Method according to claim 1, **characterised in that** at least the movement portion to be corrected is displayed with the associated reference location, line or face (7) thereof on a screen (8) and the correction of the movement path is carried out on the screen (8).

3. Method according to claim 2, **characterised in that** the degrees of freedom which the workpiece (5) has in the reference location, line or face (7) are displayed on the screen (8).

4. Method according to claim 3, **characterised in that** the degrees of freedom of the reference location, line or face (7) are displayed on the screen (8) as a dialogue element (11), which is optically associated with the reference location, line or face (7), in particular is connected to the reference location, line or face (7) by means of a line (12).

5. Method according to claim 3 or claim 4, **characterised in that** the displayed degrees of freedom of the reference location, line or face (7) can be activated on the screen (8) in such a manner that a movement of the activated degree of freedom leads to a corresponding movement of the workpiece (5) on the screen (8).

6. Method according to any one of the preceding claims, **characterised in that** the processor (9) in a movement portion, in particular when supplying the workpiece (5) to the bending press (3), defines the engagement location of the handling system (2) on the workpiece (5) as a reference location, line or face (7).

7. Method according to any one of the preceding claims, **characterised in that** the processor (9) in a movement portion, in particular when introducing the workpiece (5) into the processing region of the bending press (3), defines an edge of the workpiece (5) as a reference line (7).

8. Method according to any one of the preceding claims, **characterised in that** the processor (9) in a movement portion, in particular when positioning the workpiece (5) within the processing region of the bending press (3), defines a processing location, line or face of the workpiece (5) as a reference location, line or face (7).

9. Software or computer program which contains software coding which is adapted to carry out the method according to any one of the preceding claims on a processor (9).

10. Device (1) having software or a computer program according to claim 9 which is adapted to carry out the method according to any one of claims 1 to 8, having a screen (8) for displaying the movement portion to be corrected, the associated reference location, line or face (7) and the degrees of freedom thereof, having a processor (9) for calculating the corrected movement path and having an operating device (10) for moving the reference location, line or face (7) on the screen (8).

11. Device according to claim 10, **characterised in that** the degrees of freedom of the reference location, line or face (7) are displayed on the screen (8) as a dialogue element (11).

12. Device according to claim 11, **characterised in that** the dialogue element (11) is optically associated with the reference location, line or face (7), in particular is connected to the reference location, line or face (7) by means of a line (12).

13. Device according to claim 11 or claim 12, **characterised in that** the dialogue element (11) displays the orientation of the workpiece (5) with respect to the reference location, line or face (7).

14. Device according to any one of claims 10 to 13, **characterised in that** the degrees of freedom of the reference location, line or face (7) can be activated by means of the operating device (10) in such a manner that a movement of a degree of freedom on the screen (8) leads to a corresponding movement of the workpiece (5) on the screen (8).

## Revendications

1. Procédé pour déterminer la trajectoire de déplacement d'un système de manipulation (2) déplaçant une pièce usinée (5), en particulier d'un système de manipulation d'une presse plieuse (3), **caractérisé en ce que** la trajectoire de déplacement du système de manipulation (2) présente plusieurs sections de déplacement conformément aux différentes étapes de traitement effectuées sur la pièce (5), sachant que la trajectoire de déplacement du système de manipulation (2) est d'abord déterminée puis corrigée manuellement,
et **en ce que**, lors de la correction manuelle, un ordinateur (9) associe à chaque section de déplacement un point, une ligne ou une surface de référence (7) qui se trouve dans ou sur la pièce (5) et qui constitue, dans la section de déplacement respective, la grandeur de référence pour une correction manuelle de la trajectoire de déplacement du système de manipulation (2), sachant que des points, lignes ou surfaces de référence différents sont associés à des sections de déplacement différentes.

2. Procédé selon la revendication 1, **caractérisé en ce qu'**au moins la section de déplacement à corriger est affichée avec son point, ligne ou surface de référence associé(e) (7) sur un écran (8), et la correction de la trajectoire de déplacement est effectuée sur l'écran (8).

3. Procédé selon la revendication 2, **caractérisé en ce que** les degrés de liberté que possède la pièce (5) au point, sur la ligne ou sur la surface de référence (7) sont affichés sur l'écran (8).

4. Procédé selon la revendication 3, **caractérisé en ce que** les degrés de liberté du point, ligne ou surface de référence (7) sont affichés sur l'écran (8) sous la forme d'un élément de dialogue (11) qui est visuellement associé au point, ligne ou surface de référence (7), en particulier qui est relié au point, ligne ou surface de référence (7) par une ligne (12).

5. Procédé selon la revendication 3 ou 4, **caractérisé en ce que** les degrés de liberté affichés du point, ligne ou surface de référence (7) peuvent être activés sur l'écran (8) de telle sorte qu'un déplacement du degré de liberté activé engendre un déplacement correspondant de la pièce (5) sur l'écran (8).

6. Procédé selon l'une des revendications précédentes, **caractérisé en ce que** l'ordinateur (9) définit dans une section de déplacement, notamment lors de l'apport de la pièce (5) à la presse plieuse (3), le point d'attaque du trajectoire de déplacement du système de manipulation (2) sur la pièce (5) comme point, ligne ou surface de référence (7).

7. Procédé selon l'une des revendications précédentes, **caractérisé en ce que** l'ordinateur (9) définit dans une section de déplacement, notamment lors de l'enfilage de la pièce (5) dans la zone d'usinage de la presse plieuse (3), une arête de la pièce (5) comme ligne de référence (7).

8. Procédé selon l'une des revendications précédentes, **caractérisé en ce que** l'ordinateur (9) définit dans une section de déplacement, notamment lors du positionnement de la pièce (5) à l'intérieur de la zone d'usinage de la presse plieuse (3), un point, une ligne ou une surface d'usinage de la pièce (5) comme point, ligne ou surface de référence (7).

9. Logiciel ou programme informatique contenant un code logiciel qui est adapté pour la mise en oeuvre du procédé selon l'une des revendications précédentes sur un ordinateur (9).

10. Dispositif (1) avec un logiciel ou un programme informatique selon la revendication 9 adapté pour la mise en oeuvre du procédé selon l'une des revendications 1 à 8, avec un écran (8) pour afficher la section de déplacement à corriger, le point, ligne ou surface de référence associé(e) (7) et ses degrés de liberté, avec un ordinateur (9) pour calculer la trajectoire de déplacement corrigée, et avec un équipement de commande (10) pour déplacer le point, ligne ou surface de référence (7) sur l'écran (8).

11. Dispositif selon la revendication 10, **caractérisé en ce que** les degrés de liberté du point, ligne ou surface de référence (7) sont affichés sur l'écran sous la forme d'un élément de dialogue (11).

12. Dispositif selon la revendication 11, **caractérisé en ce que** l'élément de dialogue (11) est visuellement associé au point, ligne ou surface de référence (7), en particulier est relié au point, ligne ou surface de référence (7) par une ligne (12).

13. Dispositif selon la revendication 11 ou 12, **caractérisé en ce que** l'élément de dialogue (11) affiche l'orientation de la pièce (5) par rapport au point, ligne ou surface de référence (7).

14. Dispositif selon l'une des revendications 10 à 13, **caractérisé en ce que** les degrés de liberté du point, ligne ou surface de référence (7) peuvent être activés au moyen de l'équipement de commande (10) de telle sorte qu'un déplacement d'un degré de liberté sur l'écran (8) engendre un déplacement correspondant de la pièce (5) sur l'écran (8).
